# EUROPEAN PATENT SPECIFICATION

(11) **EP 0 625 658 B1**
(45) Date of publication and mention of the grant of the patent: **13.08.1997**
(21) Application number: 94303334.0
(22) Date of filing: 09.05.1994
(51) Int. Cl.: F16K 1/22, F16K 25/02, F16K 1/226

(54) **Butterfly valve**
Drosselklappe
Vanne papillon

(30) Priority: 15.05.1993 GB 9310025
(43) Date of publication of application: 23.11.1994
(73) Proprietor: BTR plc, London SW1P 2PL (GB)
(72) Inventor: Hollingworth, Keith Jeffery, Telford, Shropshire TF7 4DU (GB)
(74) Representative: Treves, Barry William

(56) References cited:
- DE-A- 2 901 353
- DE-B- 1 297 427
- DE-C- 1 096 134
- DE-U- 1 974 993
- GB-A- 1 512 482
- US-A- 4 067 352

## Description

This invention relates to a butterfly valve.

Conventionally a butterfly valve comprises a disc and a seat such as an annular elastomeric seal against which the disc engages when the valve is closed. Sometimes, either the disc edge or the seat is damaged, or particulate matter becomes wedged between the disc edge and the seat, and leakage of fluid occurs. In some situations a small amount of leakage can be tolerated but in others it is definitely not, particularly when contact or mixing of materials which would otherwise be separated by the valve disc can have dangerous consequences.

In order to overcome this problem it has been proposed to use a valve having two discs spaced apart longitudinally along the channel through which fluid is flowing, the two discs being linked together mechanically so as always to be parallel with one another. This arrangement is intended to ensure that if leakage of fluid past one disc occurs, then the other prevents further leakage or flow. However the provision of two discs and a linkage which accurately maintains the parallel arrangement for two discs at all angles from the open to the closed position is expensive and since the linkage is positioned outside the valve body is likely to become damaged, thus causing one disc to no longer be parallel to the other.

DE-C-1096134 discloses a flap valve positioned in a valve body, the flap comprising two parallel elastically deformable lips for sealingly engaging the interior of the valve body in the closed position and a channel located between the lips which connects to an outlet in the valve body in the closed position whereby any fluid leaking past one lip flows along the channel and out through the outlet.

GB-A-1512482 discloses a butterfly valve according to the precharacterising part of claim 1. Since the two peripheral edges are centred on the same axis, on closing, one edge has to be pushed past the deformable seating surface for the other edge. This causes excessive wear and possible damage to the edge(s) and/or seating surface(s). Furthermore, unless a mechanical stop is provided, it is easy to rotate both edges beyond their respective seating surfaces.

It is an object of the present invention to provide a butterfly valve construction which overcomes or reduces the effects of the above problems.

In accordance with the invention a butterfly valve comprises a body, a valve disc disposed in said body for sealing engagement with a valve seat of deformable material associated with said body, wherein the valve disc has two parallel peripheral edges, each of circular form in the open and closed conditions of the valve, a channel being defined between said peripheral edges which connects to an outlet, whereby when in a closed position any fluid leaking past one peripheral edge of the disc flows along the said channel and to the outlet characterised in that the centres of the two parallel peripheral edges are eccentrically disposed with respect to the rotational axis of the disc in the open and closed conditions of the valve, the centre of one edge being disposed on one side of the rotational axis of the disc and spaced apart therefrom by a preset distance measured in the plane of the disc and the centre of the other edge being disposed on the other side of the rotational axis of the disc and spaced apart therefrom by a distance measured in the plane of the disc equal to said preset distance, the valve seat having two generally cylindrical seating surfaces eccentrically disposed with respect to one another against which each of the two peripheral edges respectively seats in the closed condition of the valve.

Preferably the outlet e.g. a drain or vent comprises at least one port formed in the valve seat. Preferably also the outlet is positioned to communicate with the channel in the closed position of the valve. Further the seat may be in the form of a sealing ring and the outlet leads through the sealing ring to the exterior of the valve.

Preferably the two circular forms of each of the peripheral edges, which may be of equal diameter, are interrupted by flat surfaces adjacent to the two diametrically opposed positions where the disc is connected to one or two shafts. The flat surfaces may also interrupt the channel between the two edges and if this is so at least one groove may be provided in the flat surface to connect the interactive parts of the channel.

Preferably the valve seat comprises an annular elastomeric sealing ring formed with the two generally cylindrical surfaces, each engageable by a respective edge of the disc in the closed position.

One embodiment of the invention will now be described by way of example only with reference to the accompanying drawings of which:-
Figure 1 shows a schematic plan view of the valve disc in contact with the valve seat (which is shown in cross-section); and
Figure 2 shows a side view of the valve disc.

As shown in the drawings, the valve comprises a valve disc 1 and a valve seat 2.

The disc 1 is formed with two peripheral edges 3, 4 each having a rounded profile for sealing engagement with the valve seat 2. Between the two edges is formed a peripheral channel 5.

The disc is formed with two diametrically opposed bosses 6 and 7, having blind bores 8 and 9 extending inwards from the disc periphery. One bore 8 is adapted to receive a drive shaft (not shown) to which a torque may be applied to rotate the disc about the axis 0-0 between the opened and closed positions. Means, not shown, is provided to prevent the drive shaft rotating in the bore and thus effectively transmit torque from the shaft to the disc. The other bore 9 receives a stub axle (not shown) on which the disc is free to rotate.

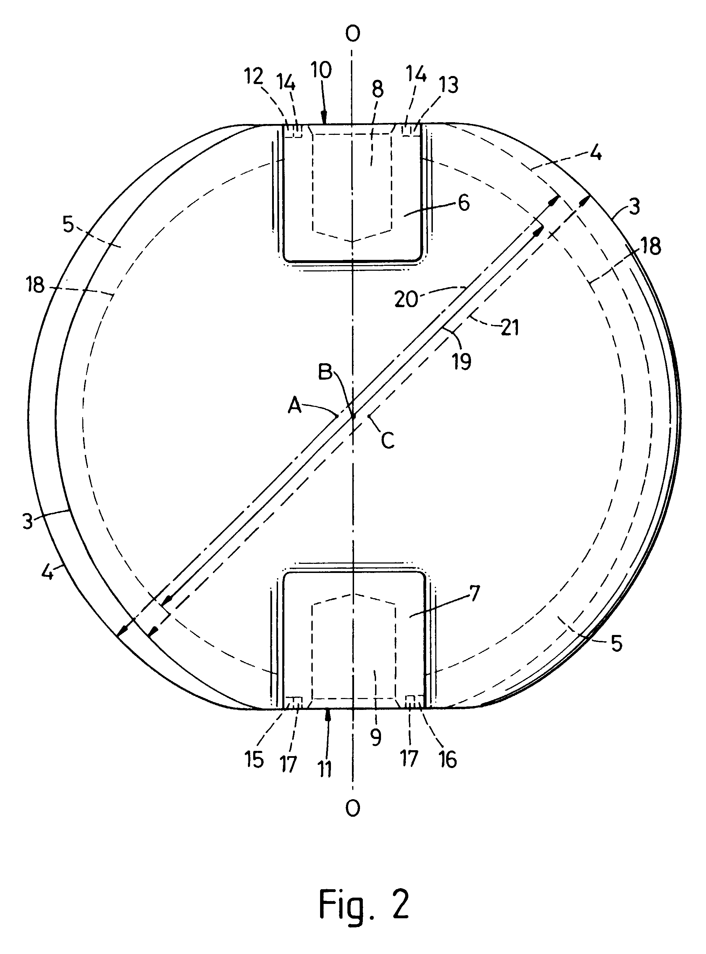

The bosses interrupt the edges 3, 4 and the channel 5. As can be seen in Figure 2, the edges merge with the outer flat faces 10, 11 of the bosses 6, 7. The channel 5 merges with two short shallow grooves 12, 13 extending to the edges of the flat surface of the boss 6 for receiving the drive shaft, the two grooves being diametrically opposed with respect to the rotational axis O-O and extending generally in the central plane P-P of the disc. The two grooves 12 and 13 join a shallow circular groove 14 which is positioned to lie coaxially with the axis O-O and to surround the blind bore 8. The flat surface 11 of the boss 7 for receiving the stub axle is similarly formed with two short grooves 15, 16 and a circular groove 17, the grooves 15, 16 and 17 all communicating with the channel 5.

The base of the channel 5 is circular in cross-section as can be seen in Figure 2, being centred at point B which lies on the rotational axis O-O of the disc and mid-way between the two flat surfaces 10, 11. The diameter 19 of the base 18 of the channel 5 is shown by a solid line in Figure 2.

The edges 3 and 4 are each of circular form as can be seen in Figure 2 except where they are interrupted by the flat surfaces 10 and 11. One edge 3 has its centre at point C midway between the two flat surfaces 10 and 11 and offset by a small preset distance B-C from the rotational axis O-O. The small preset distance B-C is measured in the plane of the disc. The diameter 21 of the edge 3 is shown by a dotted line. The other edge 4 has its centre at point A midway between the two flat surfaces 10 and 11 and is offset a small preset distance A-B from the rotational axis O-O but on the opposite side to the point C. Again, the small preset distance A-B is within the plane of the disc. The diameter 20 of edge 4 is shown by a chain dotted line. The preset distance between points A and B measured in the plane of the disc equals the preset distance between points B and C. Thus the two edges 3 and 4 are eccentrically opposed to one another and to the axis O-O.

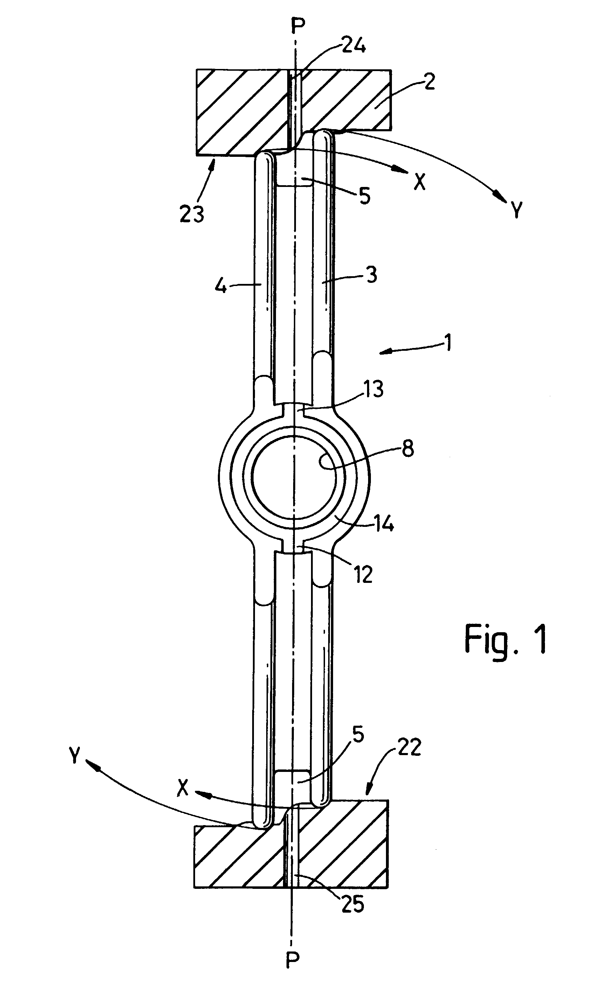

The valve seat 2, shown in Figure 1, comprises a ring of elastomeric material bonded to a suitable support surface (not shown) formed on the interior of the valve body. The valve seat has two inner surfaces 22, 23 each of cylindrical form except where the seat engages the flat surfaces 10 and 11 of the disc and eccentrically disposed with respect to one another so as to sealingly engage with the two edges 3 and 4 respectively. The surface 22 is concentric with edge 3 and the surface 23 is concentric with edge 4. The inner diameters of the surfaces 22 and 23 are each slightly smaller than the outer diameters 20, 21 of the edges 3, 4 so that when the disc 2 is in the closed position as shown in Figure 1 the elastomeric material is compressed and a good seal obtained between each edge 3, 4 and respective contacting surfaces 22, 23.

As shown in Figure 1, at the junction between the surfaces 22, 23 and the central plane P-P of the seat and the disc (in the closed position) one or more ports 24, 25 are provided through the thickness of the seat 2. The or each port also passes through the valve body to the valve exterior or to a reservoir within the valve body. The or each port is closed by suitable means (not shown) when the valve is in the open position.

As will be realised the valve disc 1 can only be moved from the closed position as shown in Figure 1 towards the open position by rotational movement in one direction i.e. clockwise as indicated by the arrows X and Y. Furthermore, on closing the valve, (i.e. with an anti-clockwise rotation) it is not possible to move the edges 3 and 4 beyond the respective seating surfaces 22 and 23 because of their eccentric disposition.

In use when the valve is in the closed position shown in Figure 1, if fluid leaks past one edge e.g. 3 it will pass into the channel 5 and then drain away through the or each port 24, 25 to the valve exterior or a reservoir, if necessary along the shallow grooves 12, 13 and 14 and/or 15, 16 and 17 formed in the surfaces 10, 11 of the bosses 6, 7 respectively. The fluid will be prevented from flowing to the other side of the disc by the sealing effect of the other edge e.g. 4. Because the two edges are integrally formed with the disc they are always accurately parallel to one another i.e. parallel to the central plane P-P of the disc.

## Claims

1. A butterfly valve comprising a body, a valve disc (1) disposed in said body for sealing engagement with a valve seat (2) of deformable material associated with said body, wherein the valve disc has two parallel peripheral edges (3,4), each of circular form in the open and closed condition of the valve, a channel (5) being defined between said peripheral edges (3,4) which connects to an outlet (24 or 25), whereby when in a closed position any fluid leaking past one peripheral edge (3 or 4) of the disc flows along the said channel (5) and to the outlet (24 or 25), characterised in that the centres (C,A) of the two parallel peripheral edges (3, 4) are eccentrically disposed with respect to the rotational axis (O-O) of the disc (1) in the open and closed conditions of the valve, the centre (C) of one edge (3) being disposed on one side of the rotational axis (O-O) of the disc (1) and spaced apart therefrom by a preset distance (B-C) measured in the plane of the disc and the centre (A) of the other edge (4) being disposed on the other side of the rotational axis (O-O) of the disc (1) and spaced apart therefrom by a distance (A-B) measured in the plane of the disc equal to said preset distance (B-C), the valve seat (2) having two generally cylindrical seating surfaces (22, 23) eccentrically disposed with respect to one another against which each of the two peripheral edges (3,4) respectively seats in the closed condition of the valve.

2. A butterfly valve according to claim 1 characterised in that the outlet (24 or 25) comprises at least one port formed in the valve seat (2).

3. A butterfly valve according to either of claims 1 or 2 characterised in that the outlet (24 or 25) is positioned to communicate with the channel (5) in the closed position of the valve.

4. A butterfly valve according to any one of claims 1, 2 or 3 characterised in that the seat (2) is in the form of a sealing ring and the outlet (24 or 25) leads through said sealing ring to the exterior of the valve.

5. A butterfly valve according to any one of the preceding claims characterised in that the two circular forms of each of the peripheral edges (3,4) are of equal diameter.

6. A butterfly valve according to any one of the preceding claims characterised in that the two circular forms of each of the peripheral edges (3,4) are interrupted by flat surfaces (10,11) ) adjacent to the two diametrically opposed positions where the disc is connected to one or two shafts.

7. A butterfly valve according to claim 6 characterised in that the flat surfaces (10,11) interrupt the channel (5) between the two edges (3,4) and at least one groove (12,13,14) is provided in the flat surface (10,11) to connect the interactive parts of the channel (5).

8. A butterfly valve according to any one of the preceding claims characterised in that the valve seat (2) comprises an annular elastomeric sealing ring formed with the two generally cylindrical seating surfaces (22,23), each engaging with a respective edge (3,4) of the disc (1) in the closed position.

## Patentansprüche

1. Drosselventil mit einem Körper, einer Ventilscheibe (1), die in dem Körper für einen Dichtungseingriff mit einer Ventilauflage (2) aus verformbarem Material angeordnet ist, die dem Körper zugeordnet ist, worin die Ventilscheibe zwei parallele, periphere Kanten (3, 4) besitzt, von denen jede in dem Offen- und Geschlossen-Zustand des Ventils eine kreisförmige Form besitzt, einem Kanal (5), der zwischen den peripheren Kanten (3, 4) festgelegt ist, der mit einem Auslaß (24 oder 25) verbindet, wodurch, wenn es sich in einer Geschlossen-Position befindet, jegliches Fluid, das hinter einer peripheren Kante (3 oder 4) der Scheibe leckt, entlang dem Kanal (5) und zu dem Auslaß (24 oder 25) strömt, dadurch gekennzeichnet, daß die Zentren (C, A) der beiden parallelen, peripheren Kanten (3, 4) in den Offen- und Geschlossen-Zuständen des Ventils exzentrisch in bezug auf die Drehachse (0-0) der Scheibe (1) angeordnet sind, wobei das Zentrum (C) einer Kante (3) auf einer Seite der Drehachse (0-0) der Scheibe (1) angeordnet ist und davon durch einen voreingestellten Abstand (B-C) beabstandet ist, der in der Ebene der Scheibe gemessen wird und wobei das Zentrum (A) der anderen Kante (4) auf der anderen Seite der Drehachse (0-0) der Scheibe (1) angeordnet ist und davon durch einen Abstand (A-B) beabstandet ist, der in der Ebene der Scheibe gleich dem voreingestellten Abstand (B-C) gemessen wird, wobei die Ventilauflage (2) zwei im allgemeinen zylindrische Auflageoberflächen (22, 23) besitzt, die in bezug aufeinander exzentrisch angeordnet sind, gegen die in dem Geschlossen-Zustand des Ventils jede der beiden peripheren Kanten (3, 4) jeweils aufliegt.

2. Drosselventil nach Anspruch 1,
dadurch **gekennzeichnet,**
daß der Auslaß (24 oder 25) zumindest eine Öffnung umfaßt, die in der Ventilauflage (2) ausgebildet ist.

3. Drosselventil nach einem der Ansprüche 1 oder 2,
dadurch **gekennzeichnet,**
daß der Auslaß (24 oder 25) positioniert ist, um in der Geschlossen-Position des Ventils mit dem Kanal (5) zu kommunizieren.

4. Drosselventil nach einem der Ansprüche 1, 2 oder 3,
dadurch **gekennzeichnet,**
daß die Auflage (2) die Form eines Dichtungsrings besitzt und der Auslaß (24 oder 25) durch den Dichtungsring hindurch zu der Außenseite des Ventils führt.

5. Drosselventil nach einem der vorangegangenen Ansprüche,
dadurch **gekennzeichnet,**
daß die beiden Kreisformen jeder der peripheren Kanten (3, 4) gleiche Durchmesser besitzen.

6. Drosselventil nach einem der vorangegangenen Ansprüche,
dadurch **gekennzeichnet,**
daß die beiden Kreisformen jeder der peripheren Kanten (3, 4) durch abgeflachte Oberflächen (10, 11) benachbart zu den beiden diametral gegenüberliegenden Positionen unterbrochen sind, an denen die Scheibe mit einer oder zwei Wellen verbunden wird.

7. Drosselventil nach Anspruch 6,
dadurch **gekennzeichnet,**
daß die abgeflachten Oberflächen (10, 11) den Kanal (5) zwischen den beiden Kanten (3, 4) unterbrechen und zumindest eine Nut (12, 13, 14) in der abgeflachten Oberfläche (10, 11) vorgesehen ist, um die interaktiven Teile des Kanals (5) zu verbinden.

8. Drosselventil nach einem der vorangegangenen Ansprüche,
dadurch **gekennzeichnet,**
daß die Ventilauflage (2) einen ringförmigen, elastomeren Dichtungsring umfaßt, der mit den beiden im allgemeinen zylindrischen Auflageflächen (22, 23) ausgebildet ist, von denen in der Geschlossen-Position jede mit einer jeweiligen Kante (3, 4) der Scheibe (1) in Eingriff steht.

## Revendications

1. Robinet à papillon comprenant un corps, un disque de robinet (1) disposé dans ledit corps afin de venir en contact étanche avec un siège de robinet (2) fait de matériau déformable associé audit corps, dans lequel le corps de robinet présente deux bords périphériques parallèles (3, 4), chacun de forme circulaire dans les positions ouverte et fermée du robinet, un canal (5) étant défini entre lesdits bords périphériques (3, 4), qui établit la communication avec un orifice de sortie (24 ou 25), grâce à quoi, lorsque le robinet est en position fermée, tout fluide fuyant au-delà d'un premier bord périphérique (3 ou 4) du disque s'écoule le long dudit canal (5) et jusqu'à l'orifice de sortie (24 ou 25), caractérisé en ce que les centres (C, A) des deux bords périphériques parallèles (3, 4) sont disposés de façon excentrée par rapport à l'axe de rotation (O-O) du disque (1) dans les états ouvert et fermé du robinet, le centre (C) d'un premier bord (3) étant disposé d'un premier côté de l'axe de rotation (O-O) du disque (1) et espacé par rapport à celui-ci d'une distance préétablie (B-C) mesurée dans le plan du disque, et le centre (A) de l'autre bord (4) étant disposé de l'autre côté de l'axe de rotation (O-O) du disque (1) et espacé par rapport à celui-ci d'une distance (A-B) mesurée dans le plan du disque égale à ladite distance préétablie (B-C), le siège de robinet (2) comportant deux surfaces de siège généralement cylindriques (22, 23) disposées de façon excentrée l'une par rapport à l'autre, contre lesquelles chacun des deux bords périphériques (3, 4) vient respectivement reposer à l'état fermé du robinet.

2. Robinet à papillon selon la revendication 1, caractérisé en ce que l'orifice de sortie (24 ou 25) comprend au moins un orifice formé dans le siège de robinet (2).

3. Robinet à papillon selon l'une ou l'autre des revendications 1 ou 2, caractérisé en ce que l'orifice de sortie (24 ou 25) est positionné de façon à communiquer avec le canal (5) dans la position fermée du robinet.

4. Robinet à papillon selon l'une quelconque des revendications 1, 2 ou 3, caractérisé en ce que le siège (2) se présente sous la forme d'une bague d'étanchéité, et l'orifice de sortie (24 ou 25) mène au travers de ladite bague d'étanchéité jusqu'à l'extérieur du robinet.

5. Robinet à papillon selon l'une quelconque des revendications précédentes, caractérisé en ce que les deux formes circulaires de chacun des bords périphériques (3, 4) sont de diamètre égal.

6. Robinet à papillon selon l'une quelconque des revendications précédentes, caractérisé en ce que les deux formes circulaires de chacun des bords périphériques (3, 4) sont interrompues par des surfaces plates (10, 11) à proximité des deux emplacements diamétralement opposés auxquels le volet est relié à un ou deux axes.

7. Robinet à papillon selon la revendication 6, caractérisé en ce que les surfaces plates (10, 11) interrompent le canal (5) entre les deux bords (3, 4) et au moins une gorge (12, 13, 14) est ménagée dans la surface plate (10, 11) afin de relier les parties interactives du canal (5).

8. Robinet à papillon selon l'une quelconque des revendications précédentes, caractérisé en ce que le siège de robinet (2) comprend une bague d'étanchéité élastomère annulaire formée avec les deux surfaces de siège généralement cylindriques (22, 23), chacune venant en contact avec un bord respectif (3, 4) du disque (1) dans la position fermée.
